(19) **Europäisches Patentamt**

**European Patent Office**

**Office européen des brevets**

(11) **EP 1 448 057 B1**

(12) **EUROPEAN PATENT SPECIFICATION**

(45) Date of publication and mention
of the grant of the patent:
**24.05.2006 Bulletin 2006/21**

(51) Int Cl.:
**A01N 37/46** (2006.01)          A01N 37/46 (2006.01)
A01N 43/54 (2006.01)          A01N 43/40 (2006.01)
A01N 37/50 (2006.01)

(21) Application number: **02779852.9**

(22) Date of filing: **25.11.2002**

(86) International application number:
**PCT/IB2002/005184**

(87) International publication number:
**WO 2003/045146 (05.06.2003 Gazette 2003/23)**

(54) **SEED TREATMENT COMPOSITIONS**

ZUSAMMENSETZUNG ZUR SAATGUTBEHANDLUNG

COMPOSITIONS DE TRAITEMENT DE SEMENCES

(84) Designated Contracting States:
**AT BE BG CH CY CZ DE DK EE ES FI FR GB GR
IE IT LI LU MC NL PT SE SK TR**

(30) Priority: **27.11.2001 GB 0128389**

(43) Date of publication of application:
**25.08.2004 Bulletin 2004/35**

(73) Proprietor: **Syngenta Participations AG
4058 Basel (CH)**

(72) Inventor: **FORSTER, Birgit
CH-4058 Basel (CH)**

(74) Representative: **Bastian, Werner Maria et al
Syngenta Participations AG,
Intellectual Property,
P.O. Box
4002 Basel (CH)**

(56) References cited:
**EP-A- 0 741 970          WO-A-00/13505
WO-A-98/58544          WO-A-02/102148**

• **DATABASE CA [Online] CHEMICAL ABSTRACTS
SERVICE, COLUMBUS, OHIO, US; ROTHROCK,
C. S. ET AL: "Report of the cottonseed treatment
committee for 1999" retrieved from STN Database
accession no. 133:248278 XP002236596 &
PROCEEDINGS - BELTWIDE COTTON
CONFERENCES (2000), (VOL. 1), 119-123 ,**

**Description**

The present invention relates to fungicidal mixtures for the treatment of plant propagation material and to methods of using such mixtures in crop protection.

WO 02/102146 discloses a plant protecting active ingredient mixtures comprising a metalaxyl, fludioxonil and a strobilurin fungicide.

WO 00/13505 discloses a two-component fungicidal composition based on metalaxyl having more than 70% by weight of the R-enantiomer.

Rothrock et al, "Report of the cotton seed treatment committee for 1999", 2000 Beltwide Cotton Conferences, vol. 1, pages 119 -123, describes the treatment of sixteen fungicide treatments on cotton.

The mixtures according to the invention comprise two fungicidally active components together with a suitable carrier material, wherein component I is

I) metalaxyl (= methyl N-(methoxyacetyl)-N-(2,6-xylyl)-DL-alaninate; The Pesticide Manual, 12th. edition, 2000, 501) or metalaxyl-M (= methyl N-(methoxyacetyl)-N-(2,6-xylyl)-D-alaninate; The Pesticide Manual, 12th. edition, 2000, 502) and wherein component II is

IIA) azoxystrobin (=methyl (E)-2-{2-[6-(2-cyanophenoxy)pyrimidin-4-yloxy]phenyl}-3-methoxyacrylate; The Pesticide Manual, 12th. edition, 2000, 49) or

IIB) picoxystrobin (= methyl (E)-3-methoxy-2-[2-(6-trifluoromethyl-2-pyridyloxymethyl)phenyl]acrylate; The Pesticide Manual, 12th. edition, 2000, 622) The Pesticide Manual, 12th. edition, 2000, 472).

The fungicidal mixtures according to the invention have very advantageous properties for protecting plants against disease infestation, particularly in the control and prevention of disease infestation on seed and soil.

These properties are for example the synergistically enhanced action of mixtures of components I and II, resulting in lower disease infestation, lower rates of application, a longer duration of action and altogether higher crop yields. Another property improved by the instant mixtures is summarized as plant vigor. Under the term plant vigor there are understood various sorts of improvements of plants which are not connected to the control of pests. For example such advantageous properties that may be mentioned are improved crop characteristics including: emergence, crop yields, protein content, more developed root system, tillering increase, increase in plant height, bigger leaf blade, less dead basal leaves, stronger tillers, greener leaf color, less fertilizer needed, less seeds needed, more productive tillers, earlier flowering, early grain maturity, less plant verse (lodging), increased shoot growth, increased plant stand and early germination; or any other advantages familiar to a person skilled in the art. Such enhancements were not to be expected from the activity of the individual components.

The weight ratio is selected as to give the desired, for example synergistic, action. In general, the weight ratio I:II is from 30:1 to 1:15, preferably from 15:1 to 1:15, in case of component I being metalaxyl and from 15:1 to 1:30, preferably from 15:1 to 1:15, in case of component I being metalaxyl-M.

The above mentioned mixtures may be mixed with other pesticides, preferably fungicides, resulting in some cases in unexpected synergistic activities.

The active ingredient mixtures in question can be used as dressings in the treatment of plant propagation material, especially seed (fruit, tubers, grains) and plant cuttings (e.g. rice), to provide protection against fungus infections on the seed as well as against phytopathogenic fungi which occur in the soil. The active ingredient mixtures according to the invention are distinguished by the fact that they are especially well tolerated by plants and are environmentally friendly.

The active ingredient mixtures are effective against phytopathogenic fungi belonging to the following classes: Ascomycetes (e.g. Penicillium, Gaeumannomyces graminis); Basidiomycetes (e.g. the genus Hemileia, Rhizoctonia, Puccinia); Fungi imperfecti (e.g. Botrytis, Helminthosporium, Rhynchosporium, Fusarium, Septoria, Cercospora, Alternaria, Pyricularia and Pseudocercosporella herpotrichoides); Oomycetes (e.g. Phytophthora, Peronospora, Bremia, Pythium, Plasmopara).

Target crops for the areas of indication disclosed herein comprise within the scope of this invention e.g. the following species of plants: cereals (wheat, barley, rye, oats, corn, maize, rice, sorghum and related crops); beet (sugar beet and fodder beet); leguminous plants (beans, lentils, peas, soybeans); oil plants (rape, mustard, sunflowers,); cucumber plants (marrows, cucumbers, melons); fibre plants (cotton, flax, hemp, jute); vegetables (spinach, lettuce, asparagus, cabbages, carrots, onions, tomatoes, potatoes, paprika); as well as ornamentals (flowers, shrubs, broad-leaved trees and evergreens, such as conifers). This list does not represent any limitation.

The active ingredient mixtures according to the invention are especially advantageous for the treatment of plant propagation material, especially seeds, of cotton, corn, soybeans, rice and peanuts.

The mixtures of components I and II are normally used in the form of compositions. The components I and II can be applied to the plant propagation material to be treated either simultaneously or in succession at short interval, for example on the same day, if desired together with further carriers, surfactants or other application-promoting adjuvants customarily employed in formulation technology.

Suitable carriers and adjuvants can be solid or liquid and are the substances ordinarily employed in formulation technology, e.g. natural or regenerated mineral substances, solvents, dispersants, wetting agents, tackifiers, thickeners, binders or fertilizers.

In order to treat plant propagation material, especially seed, the compounds I and II can also be applied to the seeds (coating), either by impregnating the tubers or grains with a liquid formulation of each of the active ingredients in succession, or by coating them with an already combined wet or dry formulation.

The compounds of the combination are used in unmodified form or, preferably, together with the adjuvants conventionally employed in formulation technology, and are therefore formulated in known manner e.g. into emulsifiable concentrates, coatable pastes, directly sprayable or dilutable solutions, dilute emulsions, wettable powders, soluble powders, dusts, granules, or by encapsulation in e.g. polymer substances. As with the nature of the compositions, the methods of application, such as spraying, atomizing, dusting, scattering, coating or pouring, are chosen in accordance with the intended objectives and the prevailing circumstances. Advantageous rates of application of the active ingredient mixture are generally from 2 g to 60 g, preferably from 2 g to 45 g, per 100 kg of plant propagation material, especially seed. Preferred rates are from 2 g to 30 g of compound I being metalaxyl or from 1 g to 15 g of compound I being metalaxyl-M and 1 g to 30 g, especially preferred 1 g to 15 g, of compound II per 100 kg of plant propagation material, especially seed.

The formulations are prepared in known manner, e.g. by homogeneously mixing and/or grinding the active ingredients with extenders, e.g. solvents, solid carriers and, where appropriate, surface-active compounds (surfactants).

Suitable solvents are: aromatic hydrocarbons, preferably the fractions containing 8 to 12 carbon atoms, e.g. xylene mixtures or substituted naphthalenes, phthalates, such as dibutyl phthalate or dioctyl phthalate, aliphatic hydrocarbons, such as cyclohexane or paraffins, alcohols and glycols and their ethers and esters, such as ethanol, ethylene glycol, ethylene glycol monomethyl or monoethyl ether, ketones, such as cyclohexanone, strongly polar solvents, such as N-methyl-2-pyrrolidone, dimethyl sulfoxide or dimethylformamide, as well as vegetable oils or epoxidised vegetable oils, such as epoxidised coconut oil or soybean oil; or water.

The solid carriers used, e.g. for dusts and dispersible powders, are normally natural mineral fillers, such as calcite, talcum, kaolin, montmorillonite or attapulgite. In order to improve the physical properties it is also possible to add highly dispersed silicic acid or highly dispersed absorbent polymers. Suitable granulated adsorptive carriers are porous types, for example pumice, broken brick, sepiolite or bentonite, and suitable nonsorbent carriers are, for example, calcite or sand. In addition, a great number of pregranulated materials of inorganic or organic nature can be used, e.g. especially dolomite or pulverized plant residues.

Depending upon the nature of the compounds I and II to be formulated, suitable surface-active compounds are non-ionic, cationic and/or anionic surfactants having good emulsifying, dispersing and wetting properties. The term "surfactants" will also be understood as comprising mixtures of surfactants.

Particularly advantageous application-promoting adjuvants are also natural or synthetic phospholipids of the cephalin and lecithin series, e.g. phosphatidylethanolamine, phosphatidylserine, phosphatidylglycerol and lysolecithin.

The agrochemical compositions normally comprise 0.1 to 99 %, especially 0.1 to 95 %, compounds I and II, 99.9 to 1 %, especially 99.9 to 5 %, of a solid or liquid adjuvant and 0 to 25 %, especially 0.1 to 25 %, of a surfactant.

Whereas commercial products will preferably be formulated as concentrates, the end user will normally employ dilute formulations.

The Examples which follow serve to illustrate the invention, "active ingredient" denoting a mixture of compound I and compound II in a specific mixing ratio.

Formulation Examples

| Wettable powders | a) | b) | c) |
|---|---|---|---|
| active ingredient [I:II = 1:6(a), 1:2(b), 1:1(c)] | 25 % | 50 % | 75 % |
| sodium lignosulfonate | 5 % | 5 % | - |
| sodium lauryl sulfate | 3 % | - | 5 % |
| sodium diisobutylnaphthalenesulfonate | - | 6 % | 10 % |
| phenol polyethylene glycol ether (7-8 mol of ethylene oxide) | - | 2 % | - |
| highly dispersed silicic acid | 5 % | 10 % | 10 % |
| Kaolin | 62 % | 27 % | - |

The active ingredient is thoroughly mixed with the adjuvants and the mixture is thoroughly ground in a suitable mill, affording wettable powders which can be diluted with water to give suspensions of the desired concentration.

| Dusts | a) | b) | c) |
|---|---|---|---|
| active ingredient [I:II = 1:6(a), 1:2(b), 1:10(c)] | 5 % | 6 % | 4 % |
| Talcum | 95 % | - | - |
| Kaolin | - | 94 % | - |
| mineral filler | - | - | 96 % |

Ready-for-use dusts are obtained by mixing the active ingredient with the carrier and grinding the mixture in a suitable mill. Such powders can be used for dry dressings for seed.

| Suspension concentrate | |
|---|---|
| active ingredient (I:II = 1:8) | 40 % |
| propylene glycol | 10 % |
| nonylphenol polyethylene glycol ether (15 mol of ethylene oxide) | 6 % |
| sodium lignosulfonate | 10 % |
| carboxymethylcellulose | 1 % |
| silicone oil (in the form of a 75 % emulsion in water) | 1 % |
| water | 32 % |

The finely ground active ingredient is intimately mixed with the adjuvants, giving a suspension concentrate from which suspensions of any desired dilution can be obtained by dilution with water. Using such dilutions plant propagation material can be treated and protected against infestation by microorganisms, by spraying, pouring or immersion.

Biological Examples

A synergistic effect exists, for example, whenever the action of an active ingredient combination is greater than the sum of the actions of the individual components.

The action to be expected E for a given active ingredient combination obeys the so-called COLBY formula and can be calculated as follows (COLBY, S.R. "Calculating synergistic and antagonistic responses of herbicide combination". Weeds, Vol. 15, pages 20-22; 1967):

ppm = milligrams of active ingredient (= a.i.) per litre of spray mixture

X = % action by active ingredient I using p ppm of active ingredient

Y = % action by active ingredient II using q ppm of active ingredient.

According to Colby, the expected (additive) action of active ingredients I+II using p+q ppm of active ingredient is $$E = X + Y - \frac{X \cdot Y}{100}$$

If the action actually observed (O) is greater than the expected action (E), then the action of the combination is superadditive, i.e. there is a synergistic effect.

A1) *Pythium ultimum / cotton* (damping-off on cotton)

A defined amount of mycelium of *P. ultimum* is mixed with water and applied into a pouch which was previously equipped with a filter paper. After application of the formulated seed treatment onto cotton seeds (cv. Sure Grow 747) the seeds are sown into the upper fault of the filter paper. The pouches are then incubated for 7 days at 18° C followed by 3 days at 24°C and a rel. humidity of 100% with a photo period of 14h. The evaluation is made by assessing the emergence and the degree of disease on the roots.

The mixtures I+IIA, and I+IIB (compound I being either metalaxyl or metalaxyl-M) according to the instant invention show good synergistic action.

**Claims**

1. An agrochemical composition for the treatment of plant propagation material, comprising the mixture of components (I) and (II) together with a suitable carrier, wherein component I is

   I) metalaxyl (= methyl N-(methoxyacetyl)-N-(2,6-xylyl)-DL-alaninate) or metalaxyl-M (= methyl N-(methoxyacetyl)-N-(2,6-xylyl)-D-alaninate) and wherein component II is
   IIA) azoxystrobin (=methyl (E)-2-{2-[6-(2-cyanophenoxy)pyrimidin-4-yloxy]phenyl}-3-methoxyacrylate) or
   IIB) picoxystrobin (= methyl (E)-3-methoxy-2-[2-(6-trifluoromethyl-2-pyridyloxymethyl)phenyl]acrylate).

2. A composition according to claim 1, wherein component II is IIA) azoxystrobin.

3. A composition according to claim 1, wherein component II is IIB) picoxystrobin.

4. A composition according to claim 1, wherein component I is metalaxyl-M.

5. A composition according to claim 1, wherein the weight ratio I:II is from 30:1 to 1:15 in case of component I being metalaxyl and from 15:1 to 1:30 in case of component I being metalaxyl-M.

6. A method of protecting plants against plant diseases by treating the plant propagation material with a component I and a component II according to claim 1, in any desired sequence or simultaneously.

7. A method according to claim 6, wherein seed is treated.

8. A method according to claim 7, wherein seed of cotton, corn, soybeans, rice or peanuts is treated.

9. Plant propagation material which has been treated in accordance with claim 6.


**Patentansprüche**

1. Agrochemische Zusammensetzung zur Behandlung von Pflanzenvermehrungsmaterial, umfassend das Gemisch aus Komponenten (I) und (II) zusammen mit einem geeigneten Träger, worin die Komponente I

   I) Metalaxyl (= Methyl-N-(methoxyacetyl)-N-(2,6-xylyl)-DL-alaninat) oder Metalaxyl-M (= Methyl-N-(methoxyacetyl)-N-(2,6-xylyl)-D-alaninat) ist, und worin die Komponente II
   IIA) Azoxystrobin (= Methyl(E)-2-{2-[6-(2-cyanophenoxy)pyrimidin-4-yloxy]phenyl}-3-methoxyacrylat) oder
   IIB) Picoxystrobin (= Methyl(E)-3-methoxy-2-[2-(6-trifluormethyl-2-pyridyloxy-methyl)phenyl]acrylat) ist.

2. Zusammensetzung nach Anspruch 1, worin die Komponente II IIA) Azoxystrobin ist.

3. Zusammensetzung nach Anspruch 1, worin die Komponente II IIB) Picoxystrobin ist.

4. Zusammensetzung nach Anspruch 1, worin die Komponente I Metalaxyl-M ist.

5. Zusammensetzung nach Anspruch 1, worin das Gewichtsverhältnis I : II 30 : 1 bis 1 : 15 beträgt, falls die Komponente I Metalaxyl ist, und 15 : 1 bis 1 : 30, falls die Komponente I Metalaxyl-M ist.

6. Verfahren zum Schutz von Pflanzen gegen Pflanzenkrankheiten durch Behandlung des Pflanzenvermehrungsmaterials mit einer Komponente I und einer Komponente II nach Anspruch 1 in irgendeiner gewünschten Reihenfolge oder gleichzeitig.

7. Verfahren nach Anspruch 6, worin das Saatgut behandelt wird.

8. Verfahren nach Anspruch 7, worin das Saatgut von Baumwolle, Getreide, Sojabohnen, Reis oder Erdnüssen behandelt wird.

9. Pflanzenvermehrungsmaterial, das nach Anspruch 6 behandelt worden ist.

**Revendications**

1. Composition agrochimique pour le traitement de matériau de propagation des plantes, comprenant le mélange des composants (I) et (II) en même temps qu'un support approprié, dans laquelle le composant I est

   I) métalaxyl (= N-(méthoxyacétyl)-N-(2,6-xylyl)-DL-alaninate de méthyle ou métalaxyl-M (= N-(méthoxyacétyl)-N-(2,6-xylyl)-D-alaninate de méthyle
   et dans laquelle le composant II est
   IIA) azoxystrobine (= (E)-2-{2-[6-(2-cyanophénoxy)-pyrimidin-4-yloxy]phényl}-3-méthoxyacrylate de méthyle ou
   IIB) picoxystrobine (= (E)-3-méthoxy-2-[2-(6-trifluorométhyl-2-pyridyloxyméthyl)phényl]acrylate de méthyle.

2. Composition selon la revendication 1, dans laquelle le composant II est IIA) l'azoxystrobine.

3. Composition selon la revendication 1, dans laquelle le composant II est IIB) la picoxystrobine.

4. Composition selon la revendication 1, dans laquelle le composant I est le métalaxyl-M.

5. Composition selon la revendication 1, dans laquelle le rapport en poids I:II est de 30:1 à 1:15 dans le cas où le composant I est le métalaxyl et de 15:1 à 1:30 dans le cas où le composant I est le métalaxyl-M.

6. Procédé de protection des plantes contre les maladies des plantes par traitement du matériau de propagation des plantes avec un composant I et un composant II selon la revendication 1, dans une séquence quelconque ou simultanément.

7. Procédé selon la revendication 6, dans lequel on traite les semences.

8. Procédé selon la revendication 7, dans lequel on traite les semences de coton, de grains, de soja, de riz ou de cacahouètes.

9. Matériau de propagation des plantes qui a été traité conformément à la revendication 6.